# EUROPEAN PATENT SPECIFICATION

(11) **EP 2 332 018 B1**
(45) Date of publication and mention of the grant of the patent: **12.06.2013**
(21) Application number: 09787270.9
(22) Date of filing: 22.09.2009
(51) Int. Cl.: G05B 15/02, G05B 19/042, H02J 13/00, H05B 37/02

(54) **AUTOMATIC ADDRESS SELECTION FOR CONTROLLABLE DEVICES**
AUTOMATISCHE ADRESSENAUSWAHL FÜR STEUERBARE EINRICHTUNGEN
SÉLECTION D'ADRESSE AUTOMATIQUE POUR DES DISPOSITIFS CONTRÔLABLES

(30) Priority: 22.09.2008 EP 08164827
(43) Date of publication of application: 15.06.2011
(73) Proprietor: NXP B.V., 5656 AG Eindhoven (NL)
(72) Inventor: BRANDSMA, Ewout, NL-5656 AE Eindhoven (NL)
(74) Representative: Krott, Michel
(86) International application number: PCT/IB2009/054153
(87) International publication number: WO 2010/032227

(56) References cited:
- WO-A1-2006/016845
- DE-A1- 19 940 651
- US-A- 5 565 855
- US-A1- 2003 137 396
- US-B1- 6 229 433

## Description

### FIELD OF THE INVENTION

The invention relates to a system of devices in a building, such as a lighting system with lighting devices.

### BACKGROUND OF THE INVENTION

US patent No. 5,565,855 describes a building management system with lamps that are controlled via a digital communication network. In such a system each installed lamp has its own network address. A control unit uses the addresses to target commands to specific lamps, for example to switch them on or off.

The installation of such a system involves programming of addresses. If the control unit has predetermined addresses for different locations this involves programming the addresses into lamp mountings (or into the lamps themselves). If the lamps (mountings) have predetermined addresses, this involves programming their addresses into the control unit. In either case it is difficult for a layman to install the system.

US patent No 6,667,690 discloses a heating, ventilation and air conditioning (HVAC) system with a digital communication network. The networked HVAC devices each have an RFID tag (Radio Frequency Identification). Upon installation, a technician uses a handheld RFID tag reader to read an identification of a networked HVAC device and to transmit it to the control unit. In addition, the technician accesses a floor plan to identify the location where the networked HVAC device is installed. The location is used to identify the network address that has to be assigned to the identified device. The control unit broadcasts the network address together with the identification from the RFID tag to enable the device to download the network address. This solution is still difficult for a layman, because it requires the use of a floor plan to identify the location of the device.

WO 2006/016845 A1 discloses a system for facility management, comprising a plurality of system devices each provided with an identity tag uniquely identifying the system device; a system layout database comprising facility layout data including intentional positions of the system devices; a system device database comprising data and identity for each system device; and an operator tool enabled to communicate with the system layout database and system device database, the operator tool being provided with a tag reader enabled to read an identity from the tags of the system devices when being in the vicinity of the system devices, wherein the operator tool is arranged to access data from the system device database about the system device and include said identity in an item of the system layout database. This solution is still relatively complex.

### SUMMARY OF THE INVENTION

Among others, it is an object to simplify installation of a system of devices in a building.

A method according to claim 1 is provided. Herein a controllable device such as a lamp for example, is provided with a tag. Control interface units, such as wall units each with a button to switch on a lamp, for example, are provided with tag reader. A control interface unit is made a control source for a controllable device by bringing it into reading range of the tag reader of the control interface unit before installation outside the reading range. Thus a selection is made from the available control interface units by selectively bringing the controllable device (e.g. a lamp) into proximity of a control interface unit (e.g. a light switch) that the user intends to control the controllable device. Messages will be sent to control the controllable device when the user actuates the control interface unit. The system in the building is configured to use information from the tag to ensure that subsequently the messages will be addressed to the controllable device that from which the tag was read at the selected control interface unit.

This is done by establishing address information derived from that tag in memory for use to address messages. As used herein, the "addressing information" may be a destination address for the messages, or any other information that can be used in the messages to allow the controllable device to respond selectively. Establishing such information may involve direct reading of the address information from the tag, or some form of message exchange with the controllable device to generate or obtain the address information using information derived from the tag. Bringing the controllable device into reading range may be done by moving the controllable device into the proximity of the control interface unit or, if the control interface unit is movable, by moving it, or both the control interface unit and the controllable device so that the controllable device is in the proximity of the control interface unit.

In various embodiments both establishment and de-establishment of addresses is provided for. De-establishment may be used to end use of a control interface unit to control a controllable device, that is, to ensure that a controllable device will no longer receive messages when the control interface unit is actuated. In an embodiment de-establishment is performed by again bringing the controllable device (e.g. a lamp) within reading range of the control interface unit (e.g. a wall-switch) that controls it. Thus de-establishment can be performed of any other units. In another embodiment de-establishment is performed by bringing the controllable device (e.g. a lamp) within reading range of another control interface unit (e.g. a wall-switch) to make this other control interface unit control it and at the same time signal that the original controlling control interface should be de- established. This may be made dependent on whether the control interface units belong to a same group, e.g. of control interface units in a same room of a building. It may also be made dependent on a user indication whether or not combined establishment and de-establishment is required. In another embodiment a tag echoing tool may used to present an echo of the tag to a control interface unit. In this way the controllable device need not be uninstalled to change its control.

In an embodiment a control interface unit may control a plurality of controllable devices simultaneously. For this purpose a list of address information for each of these controllable devices may be formed by successively bringing different controllable devices within tag reading range.

In an embodiment a control interface unit may provide for a plurality of options, for example because it comprises a corresponding plurality of user actuatable buttons, or a multi-position switch to select between the options. In this case different controllable devices may be assigned to different options, by selecting an option at a control interface unit before or while the controllable device that has to be controlled by that option is brought within reading range of the control interface unit.

The controllable device may be configured to perform successive steps through a cycle of states, each step in response to a message that is addressed to it, no matter from which control interface unit the messages are sent. Thus for example a "hotel switch" functionality may be realized when the cycle contains two states (on/off). For this purpose, the same controllable device may be established at a plurality of control interface units that are intended to cooperate to control such cycle stepping, by successively bringing the same controllable device in reading range of different control interface units in the plurality. In this case no de-establishment is performed when the controllable device is installed in more than one control interface unit.

### BRIEF DESCRIPTION OF THE DRAWINGS

These and other objects and advantageous aspects will become apparent from a description of exemplary embodiments, using the following Figures.
Fig. 1 shows a building with a network of devices
Fig. 2 shows a control interface unit
Fig. 3 shows a controllable device
Figs. 4-6 show flow charts of operation

### DETAILED DESCRIPTION OF THE DRAWINGS

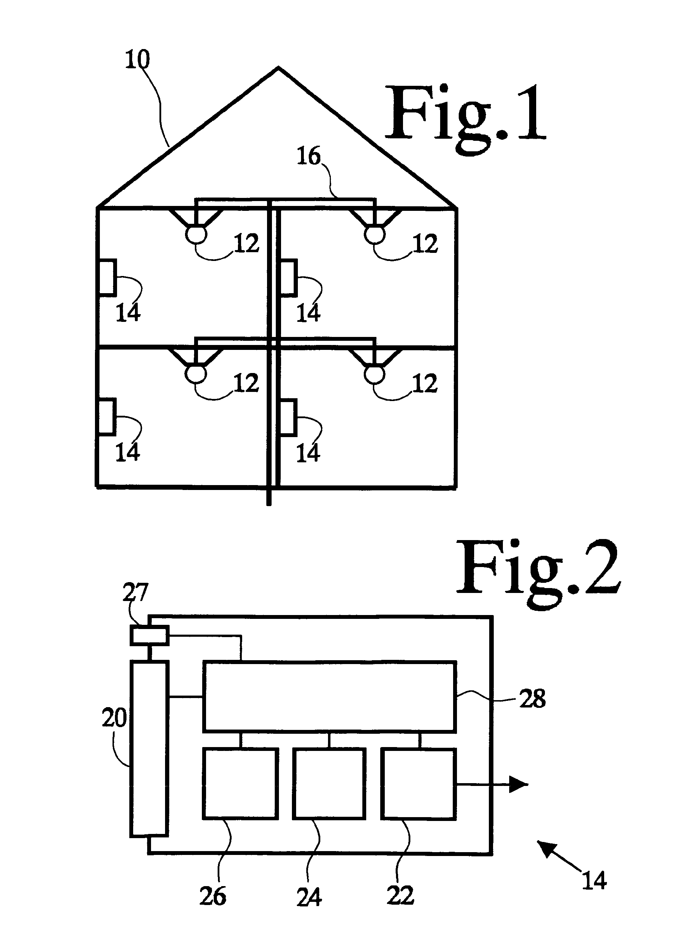

Fig. 1 shows a building 10 with a plurality of controllable devices 12 and a plurality of control interface units 14. By way of example, controllable devices 12 are lamps, coupled to a mains power supply 16 of the building 10 and control interface units 14 are lighting control buttons with attached circuits.
Fig. 2 shows a control interface unit 14, comprising a control button 20, a network transmitter 22, a memory circuit 24, a tag reader 26, an optional signalling device 27 and a controller 28. Signalling device may be a buzzer or a signal lamp for example. Controller 28 has inputs coupled to control button 20 and tag reader 26, an output coupled to network transmitter 22 and signalling device 27 and a memory interface coupled to memory circuit 24. In an embodiment memory circuit 24 may comprise a non-volatile memory, but other types of memory may be used. Instead of button 20, any other type of receptor may be used from which actuations can be detected, such as toggle switch, a touch sensor, an optical sensor, a rotatable knob, a combination of switches etc. As used herein "actuation" is any interaction of the user with the receptor that can be used to control a device. This includes both interactions to perform binary selections, like on/off or more varied control such as level adjustment or selection between options.

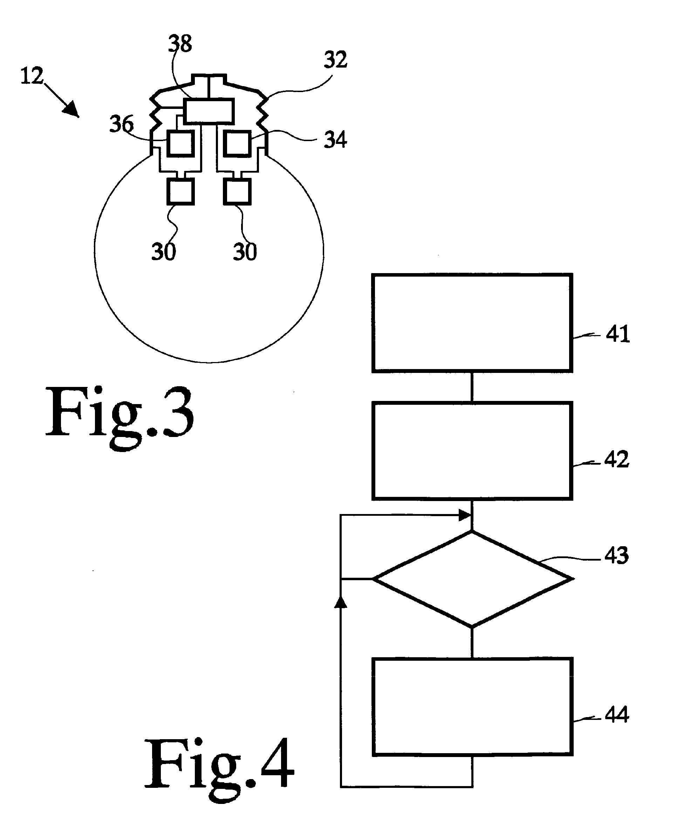

Fig. 3 shows a controllable lamp unit, for use as a controllable device, comprising lighting devices 30, a mains connector 32, an electronic tag 34, a network receiver 36 and a control circuit 38. Control circuit 38 is coupled between mains connector 32 and lighting devices 30. Control circuit 38 has a control input coupled to network receiver 36. Lighting devices 30 may be different color LEDs for example. Electronic tag 34 may be an RFID tag for example, attached to the lamp unit. It need not be electronically coupled to control circuit 38.

In normal operation each control interface unit 14 is associated with one specific controllable device 12, or group of controllable devices 12. When a user actuates a control interface unit 14, the control interface unit 14 transmits a message addressed selectively to its associated controllable device 12, or group of controllable devices 12 responsive to the actuation. As used herein the term "address" covers a network address and/or any other information that can be used to determine a target of the message. An addressed message is a message that contains such an address. In an embodiment according to Fig. 2, controller 28 detects whether control button 20 has been pushed, controller 28 retrieves the address of its associated controllable device 12, or group of controllable devices 12 from memory circuit 24 and it controls network transmitter 22 to transmit a message containing the retrieved address in response to the detection.

The controllable devices 12 receive messages and test whether the messages are destined to them. When a controllable device 12 detects a message that is destined to it, it performs an operation commanded by the message. In the embodiment wherein the controllable device is a lamp unit, control circuit 38 may receive the message from network receiver 36, compare its destination address with a pre-programmed address of the control circuit and cut or establish connections between mains connector 32 and lighting devices 30 dependent on the message if the destination address matches the pre-programmed address, or perform another control action for controllable device 12. Mains connector 32 may be screw-in foot, as is usual for light bulbs, a bayonet lock-type foot, a plug-in type connector for a wall socket, or any other structure to tap in to the mains power supply.

Prior to normal operation control interface units 14 need to establish the address in their memory circuit 24. The user controls this by bringing a particular controllable device 12 that has to be controlled by a particular control interface unit 14 within reading range of the tag reader 26 in the proximity of the particular control interface unit 14.

In this way a user can easily install new devices, e.g. new lamps in the system. When the user has acquired a new lamp, and before plugging it into a socket, the user holds the new lamp close to the control button that is intended to control the lamp. When this happens, the control interface unit 14 reads the tag of the lamp and uses it to establish the address that will be used when the button is actuated.

The proximity of the control interface unit 14 is limited, so that the controllable device 12 will be outside the proximity when at the installation point of the controllable device 12 (the mains power supply outlet where the lamp unit is screwed in). Thus, unintentional establishment of addresses is prevented. Preferably a tag reader with a short range is used, that requires touching the particular control interface unit 14 with the particular controllable device 12, or a distance that the user will not casually distinguish from a distance corresponding to touching. Thus, it can be ensured that the user does not unintentionally establish an address. Optionally, control interface unit 14 may have a user accessible control switch (not shown) coupled to its controller to enable establishment.

Fig. 4 illustrates an embodiment of establishment of the address. When the particular controllable device 12 is within reading range tag reader 26 reads the tag 34 of the particular controllable device 12 and signals this to controller 28 in a first step 41. In response, controller 28 writes information derived from the tag into memory circuit 24 in a second step 42, for use to create addresses in messages that will be transmitted in a fourth step 44, when it is detected in a third step 43 that button 20 is pushed. Optionally, second step 42 includes activating signalling device 27 to provide a feedback signal to the user.

The manufacturer of the controllable device 12, for example the controllable lamp unit ensures during manufacture that the pre-programmed address in control circuit 38 corresponds to the information in electronic tag 34, so that the addresses that are created from the information will match the programmed address. The pre-programmed address may be copied to the electronic tag 34, or vice versa tag content may be copied from tag 34 to control circuit, or both may be programmed in correspondence. Instead of including the address directly, other information may be used, from which an address can be derived.

In an embodiment the simple control button 20 of control interface unit 14 is replaced by a more complex actuator structure that allows entering a plurality of distinct user choices. A plurality of buttons may be provided for example, each for a different choice, or a combination of a multiple choice selector and a confirmation button may be used, controller 28 being configured to transmit a message corresponding to the last selected choice of the multiple choice selector before detection of actuation of the confirmation button. In this embodiment controller 28 is configured to store a plurality of addresses at respective locations in memory circuit 24, each for creating an address in messages for a respective one of the choices.

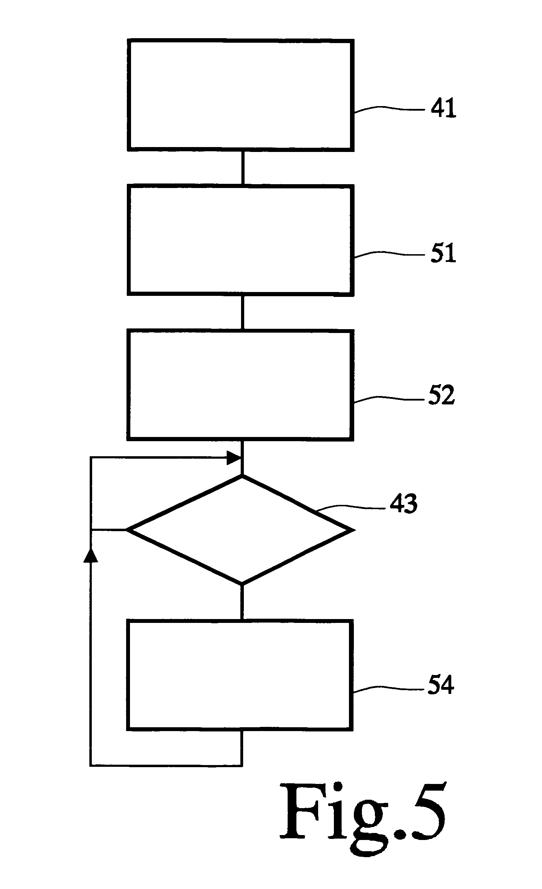

Fig. 5 illustrates establishment of the addresses in this embodiment. A first further step 51 has been added behind first step 41, wherein controller 28 determines the last selected user choice (e.g. by reading out the multiple choice selector or from information identifying the last actuated button, which controller may provide by recording the identity of each actuated button at least until a next button is pressed). In a modified second step 52 controller 28 writes the information derived from the tag into memory circuit 24 at a location that it selects based on the last selected user choice that has been determined in first further step 51. In a modified fourth step 54 the message is sent with the address from a location determined from the last selected user choice before the transmission.

In an embodiment a control interface unit provides for de-establishment of addresses. This may be used for example when a user wants to change the location of a lamp, from a first room of the building to a second room for example. To avoid that the control interface unit in the old room continues to send message addressed to the lamp unit, the address can be de-established.

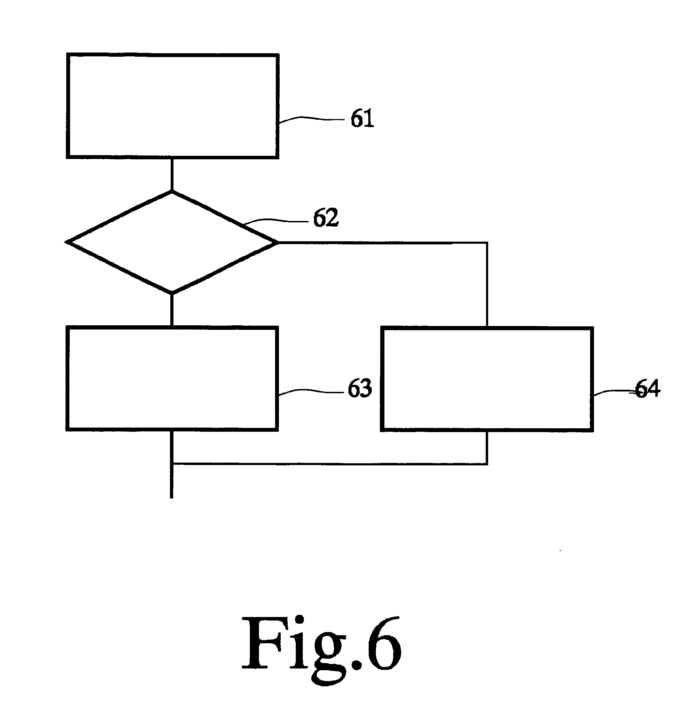

Fig. 6 illustrates an embodiment wherein de-establishment of addresses is used. Herein reader 26 reads the tag 34 of the particular controllable device 12 in a first step 61 when the particular controllable device 12 is within reading range and signals this to controller 28. In response, controller 28 performs a second step 62 to test whether the information from the tag indicates matches information that is already stored in memory circuit 24. If so, controller 28 executes a third step 63, invalidating the information. Optionally, third step 63 includes activating signalling device 27 to provide a feedback signal to the user.

If the information does not match controller 28 executes a fourth step 64, writing the information into memory circuit 24. Optionally, fourth step 64 includes activating signalling device 27 to provide a feedback signal to the user. Mutually different feedback signal may be used for feedback in third step 63 and fourth step 64.

Afterwards controller 28 uses the information, if valid, to create the address in messages generated in response to detection of actuation. In a further embodiment controller may activate a disable time interval of one to ten seconds for example after establishment or de-establishment. In this case controller 28 disables establishment and de-establishment based on tags detected in the disable time interval. This prevents double actions.

In another embodiment, controller 28 may be configured to transmit messages to a plurality of controllable devices 12 in response to a single actuation. In this embodiment a list with information to create addresses for the plurality of controllable devices 12 is stored in memory circuit 24. In this embodiment controller 28 is configured to add information to the list, each time when a tag of a new controllable device 12 is stored. This may be combined with the embodiment that provides for de-establishment. In this case, a controllable device is removed from the list when its tag is read and it is already on the list.

In another embodiment control interface units 14 are configured to communicate with each other to control de-establishment. In this embodiment at least one control interface unit 14 additionally comprises a network receiver coupled to its controller 28. When a controller 28 sets the information for creating addresses that will be used for a controllable device in response to future actuation, it broadcasts a de-establishment message with information derived from the tag to at least one other control interface unit 14 in the system. The at least one other control interface unit 14 receives this de-establishment message and its controller tests its memory circuit 24 to determine whether it has stored information that matches the tag based information in the de-establishment message. Thus establishment of addresses in multiple control interface units 14 to the same controllable device 12 can be avoided. Control interface unit 14 may have a control switch (not shown) coupled to its controller to select between combined establishment and de-establishment elsewhere when a controllable device is brought in to the proximity of a control interface unit 14, or mere establishment.

In a further embodiment a control interface unit 14 may store an identification of control interface units 14 in a group of related control interface units, for example of units in the same room of the building, or a group of units on a same panel. A professional technician may define the groups at installation in the building, so as to facilitate subsequent use by a lay user.

This can be used to control establishment or de-establishment. For example, establishment of a lamp unit for a control interface unit 14 may be used to de-establish the lamp unit for control interface units outside the group (outside the same room) but not for control interface units in the same room. In another embodiment establishment may be performed collectively for all control interface units 14 in the same group, when the controllable device is shown to one control interface unit 14 in the group. This may involve messages being broadcast to other members in the group, using a transmitter and receivers in the interface control units of the group.

In an embodiment, multiple establishments of the same controllable device 12 to a plurality of control interface units 14 are accepted. This may be used for example to provide for "hotel switch" type of control, wherein controllable device 12 toggles back or forth between two states each time when it receives a message that is addressed to it. The states may be a state with the lamp on and off respectively. Instead of toggling any other form of stepping through states in response to the messages may be used, such as successive round robin steps through a cycle of any number of states. This embodiment with establishment to a plurality of control interface units 14 may be combined with de-establishment by bringing the controllable device that has to be de-established within reading range of a control interface unit 14 that has previously stored information from the de-established controllable device.

Direct transmission of messages from control interface units 14 to corresponding controllable devices 12 may be used. Wireless transmission may be used using RF electromagnetic signals for example. Wired transmission may also be used, via the AC power lines or via a separate control network. Instead of direct transmission relay techniques may be used, wherein control interface units 14 transmit the messages to an intermediate station, which in turn forwards the messages directly or indirectly to controllable devices 12. Different transmission media may be used along the way, for example partly using wireless transmission and partly using wired transmission. Intermediate stations may be configured to forward messages from a control interface unit 14 to selected locations based on a source address of the message. In this embodiment an intermediate station is provided with a stored table that associates sources to destination addresses. Upon reception of a message from a source, the intermediate station uses the identity of the source (derived for example from a source address in the message, or from detection of a communication wire that was used to send the message, or from detection of a location where a wireless message was received) to look up the destination address in the table. The intermediate station can then send the message addressed to the looked-up destination address.

In another embodiment the identity of the source may be used to select a group of multicast addresses. Thus, for example the messages from a control interface unit may be forwarded selectively to locations in a single room associated with that control interface unit, in which case installed devices in the room can match their address with the destination address.

In another embodiment, the information from the tag may be used to perform additional steps to establish an address or a message routing path for a controllable device 12, which may be used to control the destination of messages instead of information derived from the tag. In this embodiment, controller 28 is configured to cause the network transmitter to broadcast information derived from the tag. The broadcast may include a proposed address, in which case a controllable device 12 is configured to set this address as its future destination address when it detects that the broadcast message comprises information derived from its tag. If desired a more complex protocol with multiple messages may be used to establish the address. In another embodiment a controllable device 12 is configured to respond to the broadcast by transmitting an acknowledgement when it detects that the broadcast message comprises information derived from its tag. The acknowledgement may be used to establish a network route to the controllable device 12, for use to route future messages from the user control interface unit 14 to the controllable device. A receiver in the control interface unit 14 may receive the acknowledgement for this purpose.

These embodiments may also be implemented using an intermediate device, to distribute the broadcast, and/or propose the address and/or to assign a network route between the control interface unit 14 and the controlled device 12. In principle the broadcast message to supply a proposed address may be transmitted while the controllable device 12 is still within reading range of the tag reader of the control interface unit 14, but this requires a source of power in the controllable device or transfer of power in the controllable device 12. It is preferred to receive the broadcast after the controllable device 12 has been connected to the mains power supply. For this purpose the broadcast may be delayed for a time period after reading of the tag that is considered sufficient to allow for installation of the controllable device 12 attached to the mains power supply. In an embodiment the broadcast may be repeated over a range of time, sufficiently often to make the user experience establishment of the address or route as completed once the physical installation of the controllable device 12 is complete (e.g. with a frequency of between once per tenth of a second and once per minute). An acknowledgement protocol may be used between the control interface unit 14 and the controllable device 12 for this purpose.

In another embodiment, the controllable device 12 is configured to broadcast a message comprising its identifier (as stored in the tag) and its network address, upon detecting that it has been installed (i.e. connected to the mains). In this embodiment control interface unit 14 has a receiver and its controller 28 is configured to compare received identifiers to the information stored in its memory (as read form the tag). In case of a match the controller 28 is configured to replace (or associate) the information of the tag by (or with) the network address. Thus, in operation receiving the broadcast message will provide for establishment of the address.

Although an embodiment has been shown wherein control interface units 14 store information derived from the tags in a local memory circuit 24, it should be appreciated that instead the information could be stored elsewhere, for example at a central location or in an intermediate network device. In this case, control interface units 14 may retrieve the information from the location elsewhere, each time when a message must be sent. A memory at such a central location and a collection of local memory circuits will both be referred to as "memory". In another embodiment, the intermediate device may transform messages from control interface units 14 to address the messages to the controllable device 12 or devices that is, or are, associated with the control interface unit 14 that originated the message. Thus, the control interface units 14 need not store or retrieve the information.

In fact, although an embodiment has been shown wherein much of the operations to establish a destination address for a control interface unit are performed locally in the control interface unit, it should be appreciated that many of these operations may be performed by a central controller, for example if the control interface unit forwards information from the tag that it has read together with information about its identity to a central controller. In this case the central controller may establish the address for the control interface unit and send it back to the control interface unit and/or keep the address in order to address messages when it receives a signal indicating that the control interface unit has been actuated. To cover the various possibilities, the term "control circuitry" will be used to cover a controller of a control interface unit, a collection of different control interface units, and/or a central controller with as much circuits in the control interface units as needed for control purposes.

In an embodiment a portable tag echoing device is provided that can mimic tags. Such a tag echoing device comprises a tag reader, a transponder enabling it to respond as a tag and a control circuit. The control circuit is configured to store information read by the tag reader and to use the stored information to set the content of the response when the transponder is interrogated. In operation, a user may use such a tag echoing device first by bringing it in reading range of an installed controllable device 12, for example a lamp unit connected to the mains power supply lines at some place in building 10, to read its tag. In a second step the user may bringing the tag echoing device in reading range of a control interface unit 14 to supply a copy of the information from the tag of the controllable device 12 to the control interface unit 14. In this way presentation of the controllable device 12 to the control interface unit 14 is simulated, without a need to detach the controllable device 12 from the mains power supply.

In an embodiment the tags 34 may also be used for logistic purposes, such as keeping track of specific controllable devices 12 during manufacturing and/or shipping. Preferably a type of tag is used that stores both information in a format that can be used to address messages and to track the device for logistic reasons.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method of controlling controllable devices (12) installed in a building (10) with a plurality of control interface units (14) that each comprise a receptor (20) for user actuations, the method using messages from the control interface units (14) to the controllable devices (12), in response to detection of user actuation of the receptors (20), the method comprising:
- providing a controllable device (12) with a tag (34) and providing the control interface units (14) each with a tag reader (26), capable of reading the tag (34) when the tag (34) is in a proximity of the control interface unit (14);
- bringing the controllable device (12) into the proximity of a selected one of the control interface units (14) before installation of the controllable device (12), to indicate that the controllable device (12) has to be controlled by actuation of a receptor (20) of the selected one of the control interface units (14);
- reading the tag (34) of the controllable device (12) from the selected one of the control interface units (14);
- using information from the tag (34) automatically to establish destinations to be used for messages from the selected one of the control interface units (14) in response to future detection of user actuation of the receptor (20) of the selected one of the control interface units (14);
- installing the controllable device (12) in the building (10) at a location outside said proximity.

2. A method according to claim 1, wherein the controllable device (12) is a detachable lamp unit with the tag (34) in or on the lamp unit, a mains connector (32) and a light supplying device (30), energized from the mains connector (32), said installing comprising connecting the mains connector (32) to a mains power supply of the building (10).

3. A method according to claim 1, wherein the selected one of the control interface units provides for user selection from a plurality of options, the method comprising the steps of
- selecting an elected option in the selected one of the control interface units (14) before or when the controllable device (12) is brought into the proximity of a selected one of the control interface units (14);
- using the information from the tag (34) automatically to establish destinations to be used for the future messages that will be transmitted when the elected one of the options was last previously selected.

4. A method according to claim 1, comprising de-establishing a destination to be used for the messages from the selected one of the control interface units (14) when it is detected that the controllable device (12) has been brought into the proximity of the selected one of the control interface units (14) and the destination has previously been established using information derived from the tag (34).

5. A method according to claim 1, comprising
- using a tag echoing tool to read the tag (34) of the controllable device (12) after installation,
- moving the tag echoing tool into the proximity of one of the control interface units (14); and
- establishing and/or de-establishing addressing in response to reading of echoed tag information from the controllable device (12) from the tag echoing tool.

6. A building management system for controlling an addressable controllable device (12) that is provided with a tag (34), the system comprising
- a plurality of control interface units (14), each control interface unit (14) comprising a tag reader (26) for reading tag information from the tag (34) of the controllable device (12) when said controllable device is brought within a proximity of the control interface unit (14) and a user actuation receptor (20) for detecting user actuations of the control interface unit (14);
- memory (24) for storing addressing information, the memory (24) being comprised in the control interface unit (14), and
- at least one message transmitter (22); and
- control circuitry (28) configured to receive the tag information read by the tag readers (26) of the plurality of control interface units (14), to establish addressing information for respective ones of the plurality of control interface units (14) in the memory (24), each based on the tag information received from the tag reader (26) of the respective one of the control interface units (14), and to cause the message transmitter (22) to transmit messages in response to detection of the user actuations each message addressed with the addressing information for the control interface unit (14) from which the user actuation was detected.

7. A building management system according to claim 6, wherein the memory (24) and the control circuitry (28) comprise combinations of a memory circuit (24) and a controller (28), each combination located in a respective one of the control interface units (14), and wherein the controllers (28) are configured each to establish addressing information for its control interface unit (14) in the memory circuit (24) of that control interface unit (14).

8. A building management system according to claim 6, wherein the control circuitry (28) is configured to detect whether tag information received by the tag reader (26) of at least a particular one of the control interface units (14) corresponds to previously stored addressing information for the particular one of the control interface units (14) and, if so, to de-establish the addressing information for the particular one of the control interface units (14).

9. A building management system according to claim 6, wherein the control circuitry (28) is configured to detect whether tag information received by the tag reader (26) of at least a particular one of the control interface units (14) corresponds to previously stored addressing information for another of the control interface units (14) and, if so, to de-establish the addressing information for the other of the control interface units (14).

10. A building management system according to claim 9, wherein the control circuitry (28) is configured to represent a group of control interface units (14) and to enable de-establishment for the other of the control interface units (14) dependent on whether the particular one of the control interface units (14) and the other of the control interface unit (14) both belong to the group.

11. A building management system according to claim 6, wherein at least one of the control interface units (14) provides for user selection from a plurality of options, and wherein the control circuitry (28) is configured to cause the message transmitter (22) to transmit messages in response to detection of the user actuations addressed dependent on a last previously selected one of the options, the control circuitry (28) being configured to
- determine a particular one of the options that was selected while or last before the tag (34) of the controllable device (12) was read by the tag reader (26) of the at least one of the control interface units (14); and to
- establish addressing information for the particular one of the options based on information derived from the tag (34).

12. A building management system according to claim 6, wherein the control circuitry (28) is configured to establish addressing information for a list of controllable devices (12) for the respective one of the control interface units (14), the list being expanded based on the tag information received successively from the tag reader (26) of the respective one of the control interface units (14), and to cause the message transmitter (22) to transmit messages addressed to all controllable devices (12) on the list in response to each detection of user actuation at the respective one of the control interface units (14).

13. A building management system according to claim 6, wherein at least one of the control interface units (14) is provided with a user feedback signaling unit (27) and the control circuitry (28) is configured to cause the user feedback signaling unit (27) to output a feedback signal in conjunction with establishment and/or de-establishment of the addressing information.

## Patentansprüche

1. Ein Verfahren zur Steuerung von steuerbaren Vorrichtungen (12), die in einem Gebäude (10) mit einer Mehrzahl von Steuerungsschnittstelleneinheiten (14) installiert sind, welche Steuerungsschnittstelleneinheiten jeweils einen Empfänger (20) für Benutzerbetätigungen aufweisen, wobei das Verfahren, als Reaktion auf eine Erkennung des Betätigens der Empfänger (20) durch Benutzer, Mitteilungen von den Steuerungsschnittstelleneinheiten (14) an die steuerbaren Vorrichtungen (12) verwendet, das Verfahren aufweisend:
- Ausstatten einer steuerbaren Vorrichtung (12) mit einem Tag (34) und Ausstatten jeder der Steuerungsschnittstelleneinheiten (14) mit einem Tag-Lesegerät (26), das zum Lesen des Tags (34) fähig ist, wenn das Tag (34) in einer Nähe der Steuerungsschnittstelleneinheit (14) ist,
- Bringen der steuerbaren Vorrichtung (12) in die Nähe einer ausgewählten Steuerungsschnittstelleneinheit der Steuerungsschnittstelleneinheiten (14) vor der Installation der steuerbaren Vorrichtung (12), um zu zeigen, dass die steuerbare Vorrichtung (12) durch Betätigung eines Empfängers (20) der ausgewählten Steuerungsschnittstelleneinheit unter der Steuerungsschnittstelleneinheiten (14) gesteuert werden muss,
- Auslesen des Tags (34) der steuerbaren Vorrichtung (12) von der ausgewählten Steuerungsschnittstelleneinheit der Steuerungsschnittstelleneinheiten (14),
- automatisches Verwenden von Informationen von dem Tag (34), um Destinationen zu etablieren, die für Nachrichten von der ausgewählten Steuerungsschnittstelleneinheit der Steuerungsschnittstelleneinheiten (14) als Antwort auf ein zukünftiges Detektieren von Benutzer-Betätigung des Empfängers (20) der ausgewählten Steuerungsschnittstelleneinheit der Steuerungsschnittstelleneinheiten (14) zu verwenden sind,
- Installieren der steuerbaren Vorrichtung (12) an einem Ort in dem Gebäude (10), der außerhalb besagter Nähe ist.

2. Ein Verfahren gemäß Anspruch 1, wobei die steuerbare Vorrichtung (12) eine lösbare Lampeneinheit ist mit dem Tag (34) in oder an der Lampeneinheit, einem Netzanschluss (32) und einer Lichtversorgungsvorrichtung (30), die von dem Netzanschluss (32) gespeist wird, wobei der Schritt des Installierens ein Verbinden des Netzanschlusses (32) mit einer Hauptenergieversorgung des Gebäudes (10) aufweist.

3. Ein Verfahren gemäß Anspruch 1, wobei die ausgewählte Steuerungsschnittstelleneinheit der Steuerungsschnittstelleneinheiten ein Auswählen aus einer Mehrzahl von Optionen durch einen Benutzer ermöglicht, wobei das Verfahren folgende Schritte aufweist:
- Auswählen einer gewählten Option in der ausgewählten Steuerungsschnittstelleneinheit der Steuerungsschnittstelleneinheiten (14) bevor oder indem die Steuerbare Vorrichtung (12) in die Nähe einer ausgewählten Steuerungsschnittstelleneinheit der Steuerungsschnittstelleneinheiten (14) gebracht wird,
automatisches Verwenden der Informationen von dem Tag (34), um Destinationen zu etablieren, die für die zukünftige Nachrichten zu verwenden sind, die transmittiert werden, wenn die gewählte Option der Optionen zuletzt zuvor ausgewählt wurde.

4. Ein Verfahren gemäß Anspruch 1, das ein de-Etablieren einer zu verwendenden Destination aufweist, die für die Nachrichten von der ausgewählten Steuerungsschnittstelleneinheit der Steuerungsschnittstelleneinheiten (14) zu verwenden ist, wenn es detektiert wird, dass die steuerbare Vorrichtung (12) in die Nähe der ausgewählten Steuerungsschnittstelleneinheit der Steuerungsschnittstelleneinheiten (14) gebracht worden ist, und wenn die Destination früher unter Verwendung von Informationen, die von dem Tag (34) erlangt wurden, etabliert worden ist.

5. Ein Verfahren gemäß Anspruch 1, aufweisend
- Verwenden eines Tag-Wiedergabetools zum Lesen des Tags (34) der steuerbaren Vorrichtung (12) nach der Installation,
- Bewegen des Tag-Wiedergabetools in die Nähe von einer der Steuerungsschnittstelleneinheiten (14) hinein, und
- Etablieren und/oder de-Etablieren von Adressierung in Antwort auf ein Lesen von wiedergegebenen Taginformationen von der steuerbaren Vorrichtung (12) von dem Tag-Wiedergabetool.

6. Ein Gebäudemanagementsystem zum Steuern einer adressierbaren steuerbaren Vorrichtung (12), die mit einem Tag (34) ausgestattet ist, das System aufweisend
- eine Mehrzahl von Steuerungsschnittstelleneinheiten (14), jede Steuerungsschnittstelleneinheit (14) aufweisend ein Tag-Lesegerät (26) zum Auslesen von Taginformationen aus dem Tag (34) der steuerbaren Vorrichtung (12), wenn die steuerbare Vorrichtung in einer Nähe der Steuerungsschnittstelleneinheit (14) gebracht wird, und einen Benutzerbetätigungsempfänger (20) zum Detektieren von Benutzerbetätigungen der Steuerungsschnittstelleneinheit (14),
- einen Speicher (24) zum Speichern von Adressierungsinformationen, welcher Speicher (24) in der Steuerungsschnittstelleneinheit (14) enthalten ist, und
- zumindest einen Nachrichtentransmitter (22), und
- einen Steuerschaltkreis (28), der konfiguriert ist zum Empfangen der Taginformationen, die von den Tag-Lesegeräten (26) der Mehrzahl von Steuerungsschnittstelleneinheiten (14) ausgelesen wurden, zum Etablieren von Adressierungsinformationen für jeweilige Steuerungsschnittstelleneinheiten (14) von der Mehrzahl von Steuerungsschnittstelleneinheiten (14) in dem Speicher (24), die jeweils auf den Taginformationen basieren, die von dem Tag-Lesegerät (26) der jeweilige Steuerungsschnittstelleneinheit der Steuerungsschnittstelleneinheiten (14) empfangen wurden, und zum Bewirken, dass der Nachrichtentransmitter (22) Nachrichten als Antwort darauf transmittiert, dass die Benutzerbetätigungen der Steuerungsschnittstelleneinheit (14) detektiert werden, wobei jede Nachricht mit der Adressierungsinformationen für diejenige Steuerungsschnittstelleeinheit (14) adresseiert ist, von der die Benutzerbetätigung detektiert wurde.

7. Ein Gebäudemanagementsystem gemäß Anspruch 6, wobei der Speicher (24) und der Steuerschaltkreis (28) Kombination aus einem Speicherschaltkreis (24) und einer Steuerung aufweisen, wobei jede Kombination in einer jeweiligen Steuerungsschnittstelleneinheit (14) der Steuerungsschnittstelleneinheiten (14) lokalisiert ist, und wobei jede der Steuerungen (28) jeweils konfiguriert ist zum Etablieren von Adressierungsinformationen für ihre Steuerungsschnittstelleneinheit (14) in dem Speicherschaltkreis (24) von dieser Steuerungsschnittstelleneinheit (14).

8. Ein Gebäudemanagementsystem gemäß Anspruch 6, wobei der Steuerschaltkreis (28) konfiguriert ist zum Detektieren, ob Taginformationen, die von dem Tag-Lesegerät (26) von zumindest einer bestimmten Steuerungsschnittstelleeinheit (14) der Steuerungsschnittstelleeinheiten (14) empfangen wurden, Adressierungsinformationen entsprechen, die früher für die bestimmte Steuerungsschnittstelleeinheit (14) der Steuerungsschnittstelleeinheiten (14) gespeichert wurden, und, wenn dies der Fall ist, de-Etablieren der Adressierungsinformationen für die bestimmte Steuerungsschnittstelleeinheit (14) der Steuerungsschnittstelleeinheiten (14).

9. Ein Gebäudemanagementsystem gemäß Anspruch 6, wobei der Steuerschaltkreis (28) konfiguriert ist zum Detektieren, ob Taginformationen, die von dem Tag-Lesegerät (26) von zumindest einer bestimmten Steuerungsschnittstelleeinheit (14) der Steuerungsschnittstelleeinheiten (14) empfangen wurden, Adressierungsinformationen entsprechen, die früher für eine andere Steuerungsschnittstelleeinheit (14) der Steuerungsschnittstelleeinheiten (14) gespeichert wurden, und, wenn dies der Fall ist, de-Etablieren der Adressierungsinformationen für die andere Steuerungsschnittstelleeinheit (14) der Steuerungsschnittstelleeinheiten (14).

10. Ein Gebäudemanagementsystem gemäß Anspruch 9, wobei der Steuerschaltkreis (28) konfiguriert ist zum Darstellen einer Gruppe von Steuerungsschnittstelleeinheiten (14) und zum Ermöglichen der de-Etablierung für die andere Steuerungsschnittstelleeinheit (14) der Steuerungsschnittstelleeinheiten (14) in Abhängigkeit davon, ob die bestimmte eine Steuerungsschnittstelleeinheit der Steuerungsschnittstelleeinheiten (14) und die andere Steuerungsschnittstelleeinheit (14) der Steuerungsschnittstelleeinheiten (14) beide zu der Gruppe gehören.

11. Ein Gebäudemanagementsystem gemäß Anspruch 6, wobei zumindest eine der Steuerungsschnittstelleeinheiten (14) dafür sorgt, dass ein Benutzer aus einer Mehrzahl von Optionen auswählen kann, und wobei der Steuerschaltkreis (28) konfiguriert ist zum Bewirken, dass der Nachrichtentransmitter (22) als Reaktion auf ein Detektieren der Benutzerbetätigungen Nachrichten transmittiert, die in Abhängigkeit von einer letzten früher ausgewählten Option der Optionen adressiert ist, wobei der Steuerschaltkreis (28) konfiguriert ist zum
- Bestimmen einer bestimmten Option der Optionen, die gleichzeitig oder zuletzt bevor das Tag (34) der steuerbaren Vorrichtungen (12) von dem Tag-Lesegerät (26) der zumindest eine Steuerungsschnittstelleeinheit der Steuerungsschnittstelleeinheiten (14) ausgelesen wurde, und zum
- Etablieren von Adressierungsinformationen für die bestimmte Option der Optionen basierend auf Informationen, die von dem Tag (34) abgeleitet sind.

12. Ein Gebäudemanagementsystem gemäß Anspruch 6, wobei der Steuerschaltkreis (28) konfiguriert ist zum Etablieren von Adressierungsinformationen für eine Liste von steuerbaren Vorrichtungen (12) für die jeweilige Steuerungsschnittstelleeinheit der Steuerungsschnittstelleeinheiten (14), wobei die Liste basierend auf der Taginformationen, die von dem Tag-Lesegerät (26) der jeweilige Steuerungsschnittstelleeinheit der Steuerungsschnittstelleeinheiten (14) nachfolgend empfangen wurden, erweitert worden ist, und zum Bewirken, dass der Nachrichtentransmitter (22) Nachrichten an alle steuerbaren Vorrichtungen (12) transmittiert, die auf der Liste sind, als Reaktion auf jede Erkennung einer Benutzerbetätigung bei der jeweiligen Steuerungsschnittstelleeinheit der Steuerungsschnittstelleeinheiten (14).

13. Ein Gebäudemanagementsystem gemäß Anspruch 6, wobei zumindest eine der Steuerungsschnittstelleeinheiten (14) mit einer Benutzerfeedback-Signalisierungseinheit (27) ausgestattet ist, und wobei der Steuerungsschaltkreis (28) konfiguriert ist zum Bewirken, dass die Benutzerfeedback-Signalisierungseinheit (27) ein Feedbacksignal ausgibt in Zusammenhang mit der Etablierung und/oder de-Etablierung von den Adressierungsinformationen.

## Revendications

1. Procédé de commande de dispositifs pouvant être commandés (12) installés dans un bâtiment (10) avec une pluralité d'unités d'interface de commande (14) comprenant chacune un récepteur (20) pour des actionnements d'utilisateur, le procédé utilisant des messages des unités d'interface de commande (14) aux dispositifs pouvant être commandés (12), en réponse à une détection d'un actionnement d'utilisateur des récepteurs (20), le procédé comprenant :
- la fourniture à un dispositif pouvant être commandé (12) d'une étiquette (34) et la fourniture à chacune des unités d'interface de commande (14) d'un lecteur d'étiquette (26) capable de lire l'étiquette (34) lorsque l'étiquette (34) est à proximité de l'unité d'interface de commande (14) ;
- la mise du dispositif pouvant être commandé (12) à proximité d'une unité sélectionnée parmi les unités d'interface de commande (14) avant l'installation du dispositif pouvant être commandé (12), pour indiquer que le dispositif pouvant être commandé (12) doit être commandé par un actionnement d'un récepteur (20) de l'unité sélectionnée parmi les unités d'interface de commande (14) ;
- la lecture de l'étiquette (34) du dispositif pouvant être commandé (12) à partir de l'unité sélectionnée parmi les unités d'interface de commande (14) ;
- l'utilisation d'informations de l'étiquette (34) automatiquement pour établir des destinations à utiliser pour des messages provenant de l'unité sélectionnée parmi les unités d'interface de commande (14) en réponse à une détection future d'un actionnement d'utilisateur du récepteur (20) de l'unité sélectionnée parmi les unités d'interface de commande (14) ;
- l'installation du dispositif pouvant être commandé (12) dans le bâtiment (10) à un emplacement à l'extérieur de ladite proximité.

2. Procédé selon la revendication 1, dans lequel le dispositif pouvant être commandé (12) est une unité de lampe détachable avec l'étiquette (34) dans ou sur l'unité de lampe, un connecteur d'alimentation électrique (32) et un dispositif d'alimentation de lumière (30) mis sous tension par le connecteur d'alimentation électrique (32), ladite installation comprenant la connexion du connecteur d'alimentation électrique (32) à une alimentation électrique du bâtiment (10).

3. Procédé selon la revendication 1, dans lequel l'unité sélectionnée parmi les unités d'interface de commande permet à un utilisateur de choisir parmi une pluralité d'options, le procédé comprenant les étapes de :
- la sélection d'une option choisie dans l'une sélectionnée des unités d'interface de commande (14) avant ou lorsque le dispositif pouvant être commandé (12) est mis à proximité de l'unité sélectionnée parmi les unités d'interface de commande (14) ;
- l'utilisation des informations de l'étiquette (34) automatiquement pour établir des destinations à utiliser pour les messages futurs qui seront émis lorsque l'option choisie parmi les options est sélectionnée en dernier.

4. Procédé selon la revendication 1, comprenant le désétablissement d'une destination à utiliser pour les messages provenant de l'unité sélectionnée parmi les unités d'interface de commande (14) lorsqu'il est détecté que le dispositif pouvant être commandé (12) a été mis à proximité de l'unité sélectionnée parmi les unités d'interface de commande (14) et la destination a été préalablement établie en utilisant des informations dérivées de l'étiquette (34).

5. Procédé selon la revendication 1, comprenant :
- l'utilisation d'un outil d'écho d'étiquette pour lire l'étiquette (34) du dispositif pouvant être commandé (12) après l'installation,
- la mise de l'outil d'écho d'étiquette à proximité d'une unité parmi les unités d'interface de commande (14) ; et
- l'établissement et/ou le désétablissement de l'adressage en réponse à la lecture d'informations d'étiquette renvoyées en écho depuis le dispositif pouvant être commandé (12) à partir de l'outil d'écho d'étiquette.

6. Système de gestion de bâtiment pour commander un dispositif pouvant être commandé (12) adressable qui est pourvu d'une étiquette (34), le système comprenant :
- une pluralité d'unités d'interface de commande (14), chaque unité d'interface de commande (14) comprenant un lecteur d'étiquette (26) pour lire des informations d'étiquette provenant de l'étiquette (34) du dispositif pouvant être commandé (12) lorsque ledit dispositif pouvant être commandé est mis à proximité de l'unité d'interface de commande (14) et un récepteur d'actionnement d'utilisateur (20) pour détecter des actionnements d'utilisateur de l'unité d'interface de commande (14) ;
- une mémoire (24) pour stocker des informations d'adressage, la mémoire (24) étant comprise dans l'unité d'interface de commande (14), et
- au moins un émetteur de message (22) ; et
- une circuiterie de commande (28) configurée pour recevoir les informations d'étiquette lues par les lecteurs d'étiquette (26) de la pluralité d'unités d'interface de commande (14), établir des informations d'adressage pour des unités respectives parmi la pluralité d'unités d'interface de commande (14) dans la mémoire (24) qui sont chacune basées sur les informations d'étiquette reçues du lecteur d'étiquette (26) de l'unité respective parmi les unités d'interface de commande (14), et amener l'émetteur de message (22) à émettre des messages en réponse à une détection des actionnements d'utilisateur, chaque message étant adressé avec les informations d'adressage pour l'unité d'interface de commande (14) de laquelle l'actionnement d'utilisateur est détecté.

7. Système de gestion de bâtiment selon la revendication 6, dans lequel la mémoire (24) et la circuiterie de commande (28) comprennent des combinaisons d'un circuit de mémoire (24) et d'un organe de commande (28), chaque combinaison se trouvant dans une unité respective parmi les unités d'interface de commande (14), et dans lequel les organes de commande (28) sont chacun configurés pour établir des informations d'adressage pour leur unité d'interface de commande (14) dans le circuit de mémoire (24) de cette unité d'interface de commande (14).

8. Système de gestion de bâtiment selon la revendication 6, dans lequel la circuiterie de commande (28) est configurée pour détecter si des informations d'étiquette reçues par le lecteur d'étiquette (26) de l'au moins une unité particulière parmi les unités d'interface de commande (14) correspondent à des informations d'adressage préalablement stockées pour l'unité particulière parmi les unités d'interface de commande (14) et, si tel est le cas, désétablir les informations d'adressage pour l'unité particulière parmi les unités d'interface de commande (14).

9. Système de gestion de bâtiment selon la revendication 6, dans lequel la circuiterie de commande (28) est configurée pour détecter si des informations d'étiquette reçues par le lecteur d'étiquette (26) d'au moins une unité particulière parmi les unités d'interface de commande (14) correspondent à des informations d'adressage préalablement stockées pour une autre unité parmi les unités d'interface de commande (14) et, si tel est le cas, désétablir les informations d'adressage pour l'autre unité parmi les unités d'interface de commande (14).

10. Système de gestion de bâtiment selon la revendication 9, dans lequel la circuiterie de commande (28) est configurée pour représenter un groupe d'unités d'interface de commande (14) et permettre un désétablissement pour l'autre unité parmi les unités d'interface de commande (14) si l'unité particulière parmi les unités d'interface de commande (14) et l'autre unité parmi les unités d'interface de commande (14) appartiennent toutes les deux au groupe.

11. Système de gestion de bâtiment selon la revendication 6, dans lequel au moins une unité parmi les unités d'interface de commande (14) permet à un utilisateur de choisir parmi une pluralité d'options, et dans lequel la circuiterie de commande (28) est configurée pour amener l'émetteur de message (22) à émettre des messages en réponse à une détection des actionnements d'utilisateur adressés en fonction d'une option sélectionnée en dernier parmi les options, la circuiterie de commande (28) étant configurée pour :
- déterminer une option particulière parmi les options qui a été sélectionnée pendant la lecture ou en dernier avant la lecture de l'étiquette (34) du dispositif pouvant être commandé (12) par le lecteur d'étiquette (26) de l'au moins une unité parmi les unités d'interface de commande (14) ; et
- établir des informations d'adressage pour l'option particulière parmi les options sur la base d'informations dérivées de l'étiquette (34).

12. Système de gestion de bâtiment selon la revendication 6, dans lequel la circuiterie de commande (28) est configurée pour établir des informations d'adressage pour une liste de dispositifs pouvant être commandés (12) pour l'unité respective parmi les unités d'interface de commande (14), la liste étant élargie sur la base des informations d'étiquette reçues successivement du lecteur d'étiquette (26) de l'unité respective parmi les unités d'interface de commande (14), et amener l'émetteur de message (22) à émettre des messages adressés à tous les dispositifs pouvant être commandés (12) sur la liste en réponse à chaque détection d'un actionnement d'utilisateur à l'unité respective parmi les unités d'interface de commande (14).

13. Système de gestion de bâtiment selon la revendication 6, dans lequel au moins une unité parmi les unités d'interface de commande (14) est pourvue d'une unité de signalisation de rétroaction d'utilisateur (27) et la circuiterie de commande (28) est configurée pour amener l'unité de signalisation de rétroaction d'utilisateur (27) à délivrer un signal de rétroaction en relation avec l'établissement et/ou le désétablissement des informations d'adressage.
